# EUROPEAN PATENT SPECIFICATION

(11) **EP 2 849 673 B1**
(45) Date of publication and mention of the grant of the patent: **24.03.2021**
(21) Application number: 13722029.9
(22) Date of filing: 10.05.2013
(51) Int. Cl.: C25F 3/16, A61C 13/00, C25F 7/00

(54) **ELECTROCHEMICAL SMOOTHENNING OF AN ARTICLE**
ELEKTROCHEMISCHES GLÄTTEN EINES ARTIKELS
LISSAGE ÉLECTROCHIMIQUE D'UN ARTICLE

(30) Priority: 10.05.2012 EP 12167541; 07.06.2012 GB 201210120
(43) Date of publication of application: 25.03.2015
(73) Proprietor: Renishaw Plc., Wotton-Under-Edge, Gloucestershire GL12 8JR (GB)
(72) Inventor: BEEBY, David, Wotton-under-Edge Gloucestershire GL12 8JR (GB)
(74) Representative: Brewer, Michael Robert
(86) International application number: PCT/GB2013/051212
(87) International publication number: WO 2013/167905

(56) References cited:
- EP-A2- 1 464 298
- WO-A2-2007/103446
- GB-A- 1 557 018
- US-A- 4 801 367
- US-A1- 2003 054 729
- US-A1- 2006 105 297
- US-A1- 2006 166 500
- US-A1- 2007 256 938
- US-A1- 2008 160 259

## Description

This invention relates to an article formed layer-by-layer from a powdered material, the article comprising for example at least one dental restoration, and a method of and an apparatus for manufacturing such an article.

Selective laser sintering or melting is a technique whereby products can be built up from powdered material, such as powdered metal, layer-by-layer. For example, a layer of powdered material can be applied to a bed of the laser sintering machine and a laser is then controlled so as to sinter or melt select parts of the powdered material so as to form a first layer of the part. Another layer of powder is then applied on top and the laser is again controlled to sinter or melt another layer of the part. This process is repeated until the whole part is formed. The formed part is then removed from the bed of powder. Such techniques are well known and for instance described in EP1021997 and EP1464298.

Compared to more traditional techniques such as milling parts from billets or blanks, such techniques offer rapid manufacturing, as well as facilitate manufacturing of complex parts and can help to minimise material wastage. As a result it is becoming more desirable to manufacture parts using this technique. Indeed, it is known to use such a technique for forming dental restorations, and in particular dental frameworks, which are typically complex bespoke parts.

However, current laser sintering techniques result in products with a surface finish that is rougher than that formed by a milling process. Such a surface finish can be undesirable, especially with products such as dental restorations where the rough surface finish can harbour bacteria. It is known that the surface finish of such parts can be improved by grinding or polishing of the surface using a tool, e.g. a rotating abrasive tool. However, this can be slow and laborious.

US2008/0230397 discloses the polishing of dental prostheses by means of plasma polishing. US4801367 discloses the electro-etching of dental restorations.

WO2007/103446 discloses the electropolishing of metallic stents. GB1557018 discloses the electropolishing of stainless steel US 2003/054729 discloses an apparatus for removing material from microelectronic substrates by electrochemical processing wherein the cathode can be position adjacent an area to process, in order to only process a selected region. US 2006/166500 discloses an apparatus for electrochemically processing a substrate, in which local polishing is performed by different cathode at different position adjacent the substrate.

Accordingly, this invention provides a technique for efficiently processing the surface of an article formed from a powdered material, layer-by-layer, so as to reduce the surface roughness of at least a portion of the article.

According to the present invention there is provided an electrochemical processing apparatus for electrochemically processing at least a select region of an article so as to smoothen at least said select region, comprising: an anode provided by said article; and a cathode positioned proximal said article and extending at least partly around said select region of said article so as to concentrate said electrochemical processing at said select region.

According to the present invention there is also provided a method of manufacturing an article, the method comprising: taking an article in an initial state formed from a powdered material, layer-by-layer, the article comprising at least one product; and using an electrochemical processing apparatus as set out above to electrochemically process at least a select region of the at least one product so as to smoothen said at least said select region.

Said at least one product may comprise at least one dental restoration. Said at least one product may be at least one dental restoration.

Whilst electropolishing of parts is known per se, its use with parts (and in particular dental restorations) that have initially been formed by an additive process such as laser sintering or melting requires unique considerations. For instance, electropolishing is typically used to further smoothen parts that are already relatively smooth, e.g. so as to polish machined surfaces, remove microscopic roughness from mirrors, or to remove microscopic burrs from features such as medical stents, and for instance is used for polishing parts with roughness values of less than 1µm (microns) Ra. However, additive processes which build parts layer-by-layer can introduce stepped surface finishes on sloping surfaces, and furthermore additional surface roughness can be introduced on parts made by laser sintering or laser melting powder material by virtue of collateral powder particles binding to the surface of the part during manufacture. Not only this, but other sources of surface roughness include that the outer surfaces of the part can be rippled owing to surface tension effects of the molten material causing it to rise at the centre of the laser beam and solidify into what could be described as tracks running along the beam path, and also re-welding of vaporised powder back onto the surface. There are therefore many sources of surface roughness which produce significant variations and even a certain amount of unpredictability in the surface roughness of the part being formed by the additive process.

The article could have been built via a laser consolidation processes, such as a laser sintering or melting process, also known as selective laser sintering or selective laser melting. As will be understood other processes could have been used. For example, the article could have been built via a laser cladding process, a fused deposition modelling (FDM) process or an e-beam melting process. The method can comprise the step of forming the article from a powdered material, layer-by-layer. Suitable powdered materials include cobalt-chrome, titanium, nickel alloys and steel. Accordingly, the surface roughness of at least the select region to be electrochemically processed can initially be at least 5µm (microns) Ra, for example at least 10µm (microns) Ra, for instance at least 20µm (microns) Ra, and for instance as much as 40 µm (microns) Ra. The process of the invention can be used to reduce the roughness of the surface down to not more than 0.05µm (microns) Ra and even down to not more that 0.02µm (microns) Ra. The method of the invention can therefore require an average of at least 0.25mm of material to be removed and in some circumstances as much as an average of at least 0.5mm of material to be removed.

When the part to be electrochemically processed is a dental restoration, further unique considerations are present, such as that the dental restoration needs to be very precisely finished in order to avoid a poor fit with a supporting member in the patient's mouth (e.g. an implant or a tooth prepared for receiving the restoration, commonly known as a "prep"). A poor fit can result in the dental restoration failing and/or increased risk of infection due to gaps which can harbour bacteria. Electrochemical processing is a process that attacks the whole exposed surface of the part in the electrolytic solution and hence removes material from all parts including those that have to be precisely formed and from which no further material need be removed.

Accordingly, other processes such as grinding and abrasive polishing are typically used to finish dental parts made in this way.

Nevertheless, the inventors have found that electrochemical processing can be used to achieve the desired surface finish requirements whilst still obtaining products with desired levels of accuracy. Not only this, but electrochemical processing can provide a smoother and more uniform surface finish, reduce labour required in polishing the surface and also enable smaller, more intricate features to be polished compared to traditional grinding techniques. Further still, electrochemical processing can provide greater process control resulting in more consistent smoothening of the surfaces of the part.

As will be understood, electrochemical processing removes material from the surface of the anode (i.e. the article) by way of a chemical reaction occurring between the surface (of the anode) and the electrolyte. In particular, the electrochemical processing can cause the surface of at least said region to oxidise and dissolve in the electrolyte. As will also be understood, the electrolyte used in the electrochemical process is maintained in a liquid state during the electrochemical process.

Electrochemical processing (or electropolishing) in the context of the present invention is to be distinguished from plasma polishing. Plasma polishing is an ablative (and aggressive) process requiring high temperatures (near the boiling point of the electrolyte), with the electrolyte becoming gaseous around the treated surfaces. Plasma polishing is potentially unsafe and is also demanding in terms of power requirements, requiring high voltage and high current. Plasma polishing typically also requires a very large cathode compared to the anode and/or the article being polished. On the other hand, electropolishing is much safer and cleaner, typically requiring lower voltages and current, as well as lower temperatures, than plasma polishing. Various operating parameters are described herein which differentiate embodiments of the present invention more clearly from plasma polishing. Because plasma polishing is a particularly aggressive process, it would generally be considered as being far more suitable for dealing with the type of surface roughness associated with an article formed by an additive process (see above). However, the present applicant has gone against this prejudice and has appreciated that electropolishing can be effective on articles formed from a powdered material via an additive process, layer by layer.

The electrochemical processing of the article (e.g. comprising at least one dental restoration) can be performed with the electrolyte at room temperature or at temperatures slightly above or below room temperature, e.g. with the electrolyte at least at 5°C, for example at least at 10°C, for instance at least at 15°C, and e.g. with the electrolyte at not more than 80°C, for instance not more than 60°C, for example not more than 50°C.

Furthermore, the ratio of i) the surface area of the cathode used in the electrochemical process to ii) the surface area of the article/anode can be for example not more than 10:1, for example not more than 5:1, for instance not more than 2:1.

A current density used in the electrochemical process may be less than 2000Am⁻² and preferably less than 1500 Am⁻², for example in the region of 1000Am⁻².

A driving voltage used in the electrochemical process may be less than 300 volts, for example 200 volts or less, such as 100 volts or less, for instance 50 volts or less, for example 10 volts or less and/or in the range of 5 to 35 volts such as between 8 and 15 volts.

An electrolyte gap used in the electrochemical process may be more than 0.5mm, for example more than 1mm, such as more than 2.5mm, for instance more than 5mm.

The electrochemical processing may remove material from the surface of the article by way of a chemical reaction occurring between the surface of the article and the electrolyte.

The electrochemical processing may cause the surface of at least said region to oxidise and dissolve in the electrolyte.

The electrolyte used in the electrochemical process may be maintained in a liquid state during the electrochemical process.

The method may comprise electrochemically processing substantially only said select region.

The method can comprise further processing the article subsequent to said electrochemical processing. Said further processing can comprise machining, e.g. milling, at least a portion of the article. Accordingly, said further processing can comprise processing, e.g. machining, at least one feature on said article. It might be that the at least one feature is formed entirely during the further processing. Optionally, the at least one feature can have already been at least partially formed in the article in its initial state (e.g. it was at least partially formed during process in which the article was formed in from the powdered material, layer-by-layer). Accordingly, processing the at least one feature can comprise finishing the at least one feature. This could comprise removing material on the at least one feature. Accordingly, the at least one feature could be provided with excess material which is removed during the further processing. Accordingly, when the method comprises forming the article in its initial state, this step can comprise adding excess material onto at least the at least one feature. Such excess material can be material in excess to what is ultimately desired for the finished product (e.g. dental restoration).

Indeed, the article in its initial state could be provided with excess material, at least in select parts (e.g. at said select region), and optionally over its entire surface, so as to compensate for removal of material during said electrochemical processing. Again, such excess material can be material in excess to what is ultimately desired for the finished product (e.g. dental restoration).

Said further processing can comprise roughening at least a portion of the article, e.g. a region different to said select region. This could be the region of the abutment to which another material is to be adhered, such as porcelain or a crown or a bridge, e.g. a bonding surface of the abutment. Such a region could be the coronal region of the abutment.

Said select region can comprise the emergence profile of the dental restoration, also known as the "transgingival region".

A cathode of the electrochemical processing apparatus used to electrochemically process said at least said region can be located so as to direct (e.g. focus or concentrate) the electrochemical processing at said select region. The cathode can be physically attached to said article. Preferably the maximum distance between the cathode and article during the electrochemical processing is not more than 20mm, more preferably not more than 15mm, especially preferably not more than 10mm. Preferably the minimum distance between the cathode and article during the electrochemical processing is not less than 2mm, more preferably not less than 5mm.

The article can comprise a plurality of individual products (e.g. dental restorations) joined together. Hence, the method can comprise concurrently electrochemically processing said plurality of products (e.g. dental restorations). Said plurality of products (e.g. dental restorations) can be attached to a common member. The cathode can at least partially surround said plurality of products (e.g. dental restorations), e.g. it can at least partially extend annularly around said plurality of products (e.g. dental restorations).

The method can comprise subsequently taking another article, comprising at least one product (e.g. dental restoration), in an initial state, formed from a powdered material (e.g. layer-by-layer) and electrochemically processing at least a select region of the at least one product (e.g. dental restoration) so as to smoothen at least said select region. In other words, the method can comprise taking a series of articles, each comprising at least one product (e.g. dental restoration) and electrochemically processing them in accordance with the above described electrochemical process. Preferably, the series of articles are configured such that the position of the at least one product (e.g. dental restoration) with respect to the article is substantially in the same location for each of said articles. Preferably, when the articles comprise more than one product (e.g. dental restoration), the location of the products (e.g. dental restorations) with respect to the article is substantially common for each of said articles. This enables a common cathode to be used for all of said series of articles whilst still maintaining a good level of control of the electrochemical processing of said products (e.g. dental restorations).

A regulated current power supply may be used for the electrochemical processing

The method may comprise using an electrochemical processing apparatus as described below.

As stated above, according to the present invention there is provided an electrochemical processing apparatus for electrochemically processing at least a select region of an article (e.g. a dental restoration) so as to smoothen at least said select region, comprising: an anode provided by said article; and a cathode positioned proximal said article and extending at least partly around said select region of said article so as to concentrate said electrochemical processing at said select region.

Preferably the cathode is arranged to be located on the side of said article proximal said select region. This can concentrate the electric field strength at said select region. In other words, the apparatus can be configured such that the electric field strength is greater at said region than at another region of said part. For instance, in the case of a dental restoration, the apparatus can be configured such that the electric field strength is greater at the end of the dental restoration comprising said at least region than at its other end. More particularly, the apparatus can be configured such that the electric field strength is greater at the emergence profile end of the dental restoration than at the coronal end.

The cathode can be physically secured to said article during said electrochemical processing. This can aid control of the position of the cathode relative to the article being processed.

The cathode could be removable from the electrochemical processing apparatus' tank. This is especially the case if it can be physically secured to said article during said electrochemical processing.

Suitable materials for the cathode include stainless steel, titanium, copper and other noble metals.

The electrochemical processing apparatus may comprise a regulated current power supply.

The article can comprise at least one product connected to at least one member e.g. a sacrificial member that is not ultimately to form part of the product. The member could be a hub and the at least one product could be connected around and to said hub. The member could for instance be a member for enabling the article to be held in the electrochemical processing apparatus, e.g. without requiring physical contact with the at least one product. The member could for instance be a member for enabling the article to be clamped in a holding device of a machine tool apparatus for subsequent processing.

The article can comprise a plurality of individual products attached to each other. For example, as with the above described method, the individual products could comprise a plurality of individual dental restorations.

The plurality of individual products can be attached to the aforementioned member, in which case could be described as a common member.

The cathode can be physically secured to said member via an electrically insulating barrier member.

The cathode may be provided with a region which corresponds generally in shape to said select region of said article.

The cathode can be configured to extend entirely annularly around said article. The cathode can comprise a trough, e.g. can be trough-shaped, in which the at least one product can be at least partially positioned. For example, the article and/or apparatus could be configured such that at least said region is situated in said trough. For example, the article and/or apparatus could be configured such that at least another region of said at least one product protrudes from said trough, e.g. such that only at least said region is situated in said trough. The cathode can comprise at least one passageway, e.g. an opening or a hole, through which electrolyte can cross or pass through (e.g. the body of) the cathode.

Also disclosed is a product (such as a dental restoration) made by an additive process, e.g. from a powdered material, layer-by-layer, such as via a laser consolidation process (for example via a selective laser sintering or selective laser melting process), comprising at least a first electrochemically polished region.

Also disclosed is a method of manufacturing a dental implant-supported abutment comprising: building an abutment, including the part for interfacing with an implant member, from a powdered material, layer-by-layer, via a laser sintering process. Such a method can comprise processing at least a part of the abutment subsequent to said laser sintering process. Said processing can comprise removing material from the abutment, e.g. via machining. The method can comprise processing the part for interfacing with an implant member. Processing can comprise, subsequent to said laser sintering process, mounting the abutment in a dcvicc for holding the abutment during said processing. The laser sintering process can comprises building a mount connected to the abutment via which the abutment is mounted in the device for holding the abutment during said processing. Preferably, the abutment and mount are configured such that when the abutment is mounted in the device for holding the abutment during said processing, the abutment's longitudinal axis, which could for example be parallel or even coincident with the axis of any current or yet to be formed bore of the abutment (though which an implant screw, or screwdriver for fastening an implant screw can be received), and optionally for example the axis of the part for interfacing with the implant member is parallel to the tool, e.g. cutting tool, for processing the abutment. The laser sintering process can comprise building a plurality of abutments connected to the same mount. At least two, and preferably all, of the plurality of abutments can be oriented such that their part for interfacing with an implant member are oriented in the same direction, e.g. such that their longitudinal axes are parallel to each other.

Also disclosed is a product or article produced by a method as described herein. Where the article comprises a plurality of individual products joined together, this aspect of the present invention is also intended to cover one or more of those products when separated or detached from one another. Likewise, where the products are attached to each other via a common member, this aspect of the present invention is also intended to cover one or more of those products when separated or detached from the common member.

As will be understood, the concepts described in connection with the first aspect of the invention are equally applicable to the other above mentioned aspects of the invention, and vice versa.

An embodiment of the invention will now be described, by way of example only, with reference to the following figures, in which:
Figure 1 shows schematically a selective laser sintering machine for forming an article;
Figure 2 shows schematically a cross-sectional view of an implant abutment attached to a supporting implant;
Figures 3a and 3b show schematically underside views of an article comprising a plurality of abutments connected to a central hub in its initial state;
Figures 4a and 4b show schematically top-side views of the article shown in Figure 3;
Figure 5 shows a flow chart illustrating the steps involved in a process according to one embodiment of the invention;
Figure 6 shows schematically a cross-sectional side view of the laser sintered article of figures 3 and 4 still attached to a build plate during manufacture;
Figure 7 shows a schematic illustration of the apparatus used for electrochemically processing the dental abutments formed via a laser sintering process;
Figure 8 is a perspective view of the arrangement shown in Figure 7; and
Figures 9a and 9b illustrate the difference in surface finish of the emergence profile of a dental abutment before and after electrochemical processing.

The below description provides an example of how the invention can be used to manufacture an implant-supported abutment. As will be understood, an implant-supported abutment is a particular type of dental restoration which in use is secured to a dental implant already implanted into a patient's jaw so as to retain the dental restoration in the patient's mouth. Typically, an implant-supported abutment is used to replace a single tooth. Implant-supported abutments are typically made from a base structure of metal, with porcelain, a bridge or a crown being added to the abutment before it is fitted to provide the desired finish form and look of the abutment.

As will be understood, the invention is not limited to the manufacture of implant-supported abutments but could also be used for instance in the manufacture of other types of dental restorations, such as bridges or crowns. However, the invention is also not limited to dental restorations in general. Rather, the invention can be used in the manufacture of a wide range of different types of products, such as other types of medical implants, aerospace parts and jewellery.

As will be understood, an implant supported abutment needs to be made accurately so as to ensure that the abutment provides a comfortable and enduring fit in a patient's mouth. It is known to use a machine tool, such as a CNC milling machine to produce a dental abutment from a blank or "billet" of sufficient volume so that the entire abutment can be machined in one piece. As will be understood, for implant-supported abutments, the blank can be a solid piece of metal, for example titanium or a cobalt chrome alloy. Other materials can be used, for instance zirconia, although in this case, a metal link member is sometimes required between the zirconia body and implant. In any case, such a milling/machining technique results in a highly accurate framework being formed, but is time consuming, expensive and involves significant material wastage

The embodiment described according to the present invention makes use of an additive process to produce an initial form of the abutment. An electrochemical process is then used to improve the surface finish of at least a select region of the abutment. If desired, further processing of the framework can take place, e.g. the machining of certain features of the framework. The use of an additive process can be advantageous over machining the entire dental restoration body from a solid blank as it requires significantly less material and also can be less time consuming.

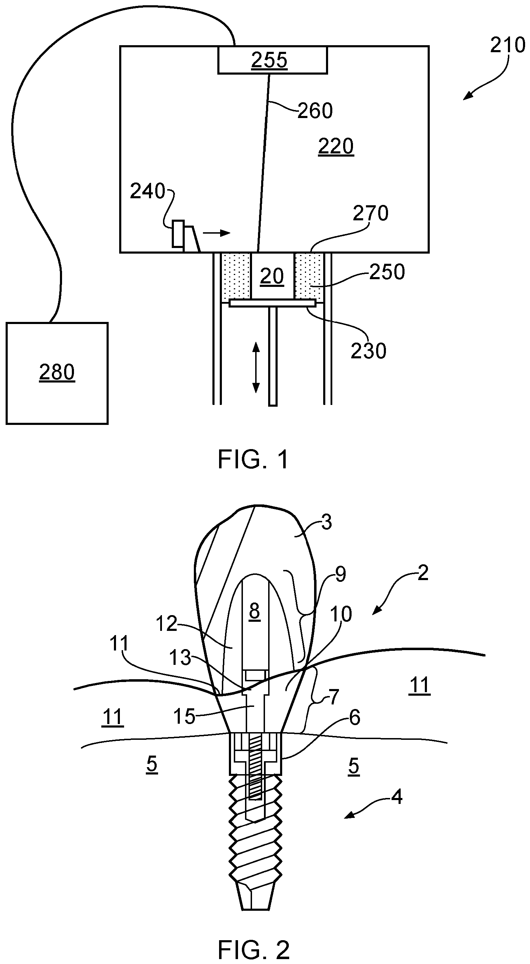

Figure 1 illustrates a typical arrangement of a build chamber 210 of a selective laser sintering/melting machine. The build chamber 210 defines a space 220 above a lowerable build platform 230. The build chamber 220 comprises a powder dispensing and coating apparatus 240 for spreading powder 250 over the surface of the build platform 230. A window 255 in an upper wall of the chamber 210 allows a laser beam 260 to be directed to irradiate powder spread at a build surface 270, so as to selectively sinter/melt the powder thereby forming a layer of the article 20 to be manufactured. The laser and lowerable platform 230 can be controlled by a controller, 280, such as a PC, which has a program defining the process for forming the article 20. The program can control the laser sintering process on the basis of CAD data of the part to be formed. In particular, the CAD data can be split into a number of layers, each layer corresponding to a layer to be formed by the laser sintering process.

Figure 2 illustrates how a completed dental restoration 2, in this case an implant-supported abutment 12, in its final state may be affixed to an implant 4 in a patient's jaw bone 5. Neighbouring teeth are not shown in this drawing for sake of simplicity. As shown, an outer layer of porcelain 3 is added to the abutment 12 to provide the final outer shape of the dental restoration 2. Figure 1 shows the implant/framework interface 6, which is the region at which the abutment 12 and the implant 4 engage each other. This is a portion of the abutment's 12 surface that is to be finished to a high degree of accuracy. As shown, the abutment 12 comprises a counter bore 8 formed in it into which an implant screw 10 can be located. The counter bore 8 comprises an upper section 13 and lower section 15. The lower section 15 has a smaller radius than the upper section 13, and in particular has a radius smaller than the head of the screw 10 which is used to secure the abutment 12 to the implant 4. As shown, when screwed into the implant 4 through the counter bore 8, the screw 10 securely fastens the counter bore 8, and hence the abutment 12, to the implant 4.

Also shown in Figure 2 is the emergence profile region 7 between i) the implant interface 6 and ii) the portion 9 of the abutment 12 onto which the porcelain/crown is added (often referred to as the coronal region 9). This emergence profile region 7 can also be described as being the region between the abutment's implant interface 6 and the abutment's margin line 11. As will be understood the margin line is commonly understood as being the edge around the abutment up to which the porcelain or crown is intended to be provided. This region 7 of the abutment's metal surface is therefore exposed and in direct contact with the patient's gums 11, or gingiva. This emergence region 7 is commonly referred to in the dental field as the "emergence profile" or the "transgingival region". It can be important that this emergence profile region 7 is smooth so as to avoid irritation of the gingiva and also to prevent the harbouring of bacteria.

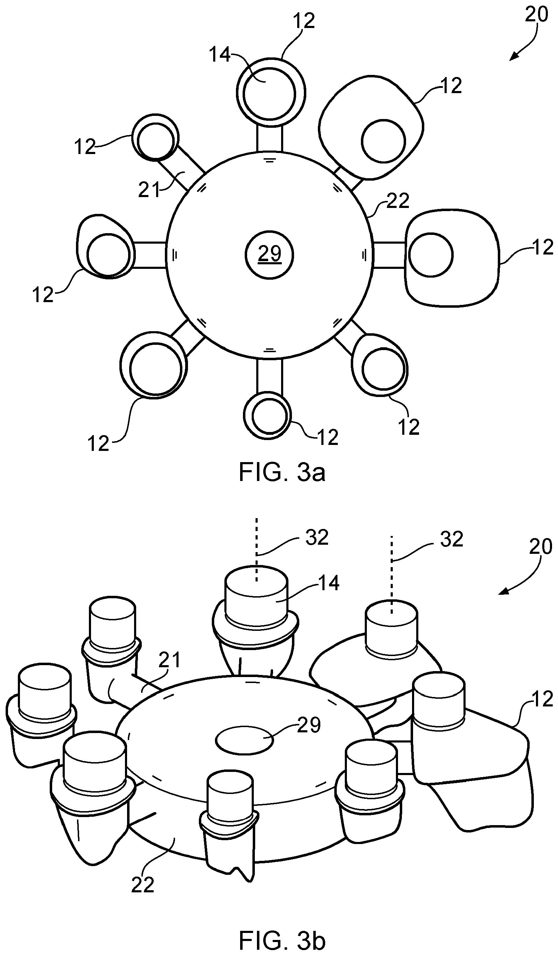

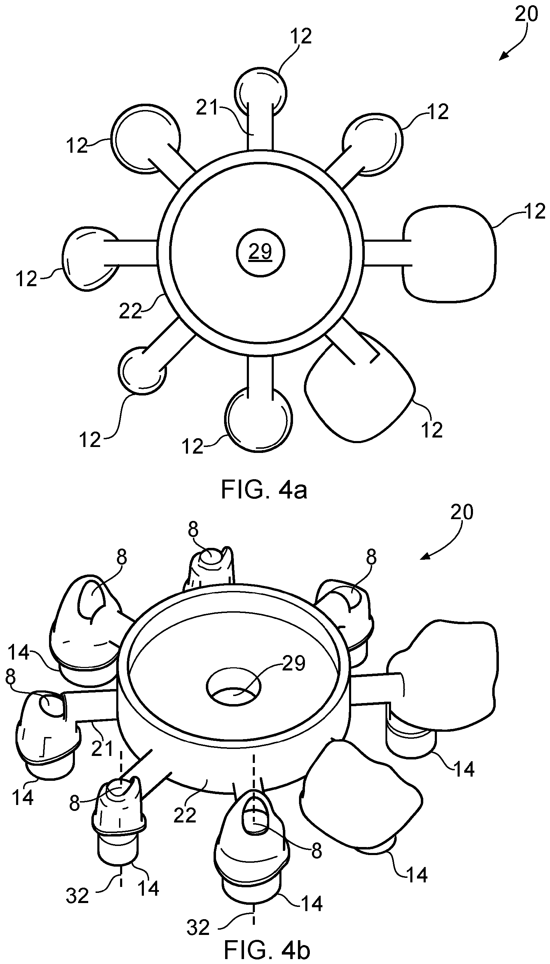

Figures 3a and 3b and Figures 4a and 4b respectively show underside and top-side views of an article 20 made from powdered cobalt-chrome via a laser sintering process which comprises a plurality of individual abutments 12, each of which is attached to a common central hub 22 via a connecting bar 21. As shown, the lowermost surface of each abutment 12 comprises a circular disk/boss-like protrusion of excess material 14 from which the abutment's 12 implant interface 6 is still to be machined. As shown, all of the abutments 12 are oriented such that their longitudinal axes 32 are parallel to each other. Furthermore the abutments and mount are configured such that when the article 20 is mounted in a clamp during any optional subsequent machining step, the abutment's longitudinal axis 32, can be parallel to the cutting tool's longitudinal axis.

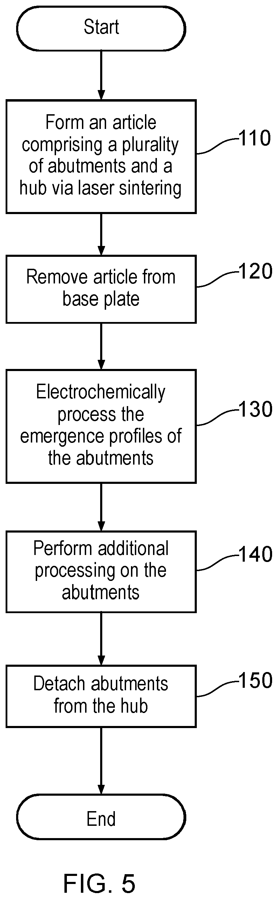

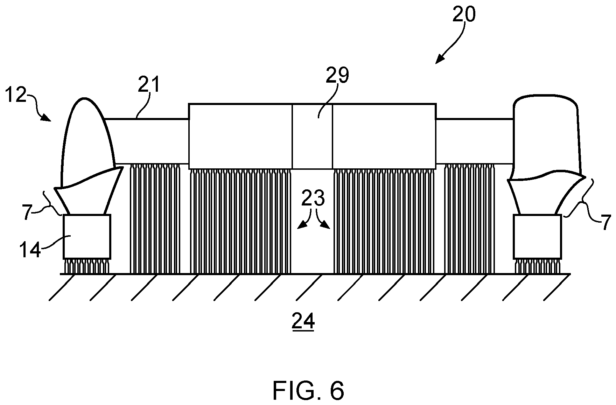

Figure 5 is a flowchart illustrating the method of producing an implant-supported abutment 12 according to one embodiment of the invention. Each of the steps illustrated will be explained with reference to Figures 6 to 9.

In the first step 110, the article 20 comprising a plurality of abutments 12 and a central hub 22 is produced using a rapid manufacturing process, which in this process is a selective laser sintering process. As will be understood, the selective laser sintering process comprises using a selective laser sintering machine such as that schematically shown in Figure 1 and described above, to repeatedly add layers of powdered material to the article 20. A high intensity laser is focussed on the region of the powdered material corresponding to the appropriate shape of the article 20 for the appropriate layer, so as to bind the powder. Subsequently, the surface on which the sintering takes place is lowered, so that when the powdered material is next applied the laser may focus at the same height, but scanned around an appropriate course across the powder.

Figure 6 shows a cross-section view of an article 20 having been constructed by selective laser sintering, but still located on a build plate 24. The article 20 is resting on a support structure 23, which is a web of sintered material of lesser density than the article, but is of sufficient strength to support the article 20 and to prevent both distortion under its own weight and internal thermal stresses; the support structure 23 is also referred to herein as scaffolding or a support web. As will be understood, although not shown, the build plate 24 may be considerably larger than the article 20 being produced and as such may permit several articles 20 to be built simultaneously.

The second step 120 follows the completion of the selective laser sintering process, and comprises removing the build plate 24 and the article 20 from the selective laser sintering apparatus and preparing it for machining. Preparation can include various optional stages such as placing the article 20, along with support web 23 and build plate 24 into an industrial oven, in order that a stress relief heat treatment cycle may be conducted. The article 20 is then removed from the build plate 24 by cutting the support structures 23, with any remaining parts of the structure 23 removed by pliers and abrasive rotary tools. The article 20 can then be grit blasted to make the entire surface smoother. Even after grit blasting, the side of the article 20 that was connected to the support structure can sometimes (depending for example on the use of abrasive tools before blasting) still be significantly rougher than the opposite side, due to remnants of the support structure 23 remaining on the article 20. As shown, the abutments' emergence profile regions 7 and the excess material 14 from which the implant interfaces are to be machined are found on the lower surface of the article 20 to which the support structure 23 was provided.

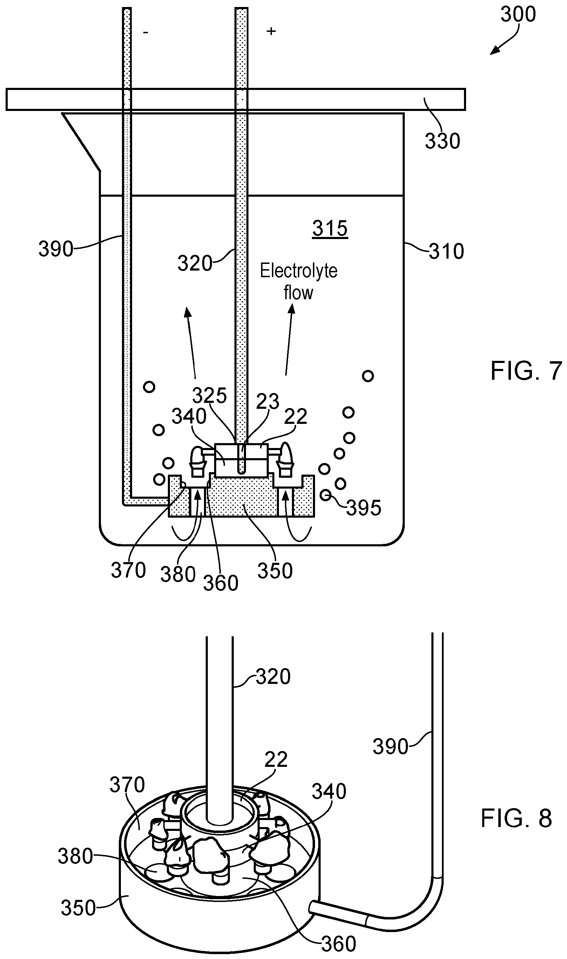

At step 130, as illustrated by Figure 7, the article 20 is subjected to an electrochemical process. The electrochemical process causes the metal on the article's surface to oxidise and dissolve in the electrolyte, thereby smoothening the surface. As shown in the Figure 7, the article 20 is mounted in an electrochemical processing apparatus 300 which comprises a 5 litre glass tank 310 which holds approximately 4 litres of electrolytic solution 315 which in this case comprises 85% ethylene glycol, 10% sulphuric acid and 5% hydrochloric acid, and in the current embodiment is at room temperature. As will be understood other electrolytic solutions could be used and will depend on many factors including the size and material of the article 20 being processed. The apparatus 300 further comprises an anode bar 320 which is electrically connected to a positive terminal of a voltage supply and which in use a first end of is physically suspended from the lid 330 of tank 310. The article 20 is both physically and electrically connected to a second end of the anode bar 320. In this case the article's 20 hub 22 has a bore 29 through which the anode bar 320 extends so that it can be screw-fastened to an electrically insulating block 340 via co-operating screw threads on the end of the anode bar 320 and insulating block 340. The article's hub is thereby sandwiched between the electrically insulating block 340 and a lip 325 toward the end of the anode bar 320. The apparatus 300 further comprises a stainless steel cathode 350 which in this case (and as is more clearly shown in Figure 8) comprises a disc-like member having an annular trough defining inner 360 and outer sides 370. Such a design has been found to be particularly useful at combating the effects of shielding which can occur when large areas of anode component (such as the hub 20 and connector bar 21) come close to regions that require processing and cause the electric field to locally spread over a greater surface area. Such a dilution of the field drives a lower current density through those areas which reduces material removal rate and hence results in uneven material removal. The use of a cathode designed such that it provides a more uniform gap between the cathode and critical areas of the anode (e.g. the emergence region 7 of the dental restorations) (e.g. as provided by a cathode with a U-shaped trough in which at least part of the dental restoration can be received) can reduce the shielding effect to a negligible level.

A plurality of holes 380 are spaced around the planar face of the disc-like cathode 350 which permit the passage of electrolytic solution through the cathode 350. The cathode 350 is press-fit secured to the insulating block 340. The cathode 350 is thereby held in a defined location with respect to the article 20. Furthermore, such a configuration allows the whole electrical assembly to be lifted out of the tank in one piece which aids cleaning and reduces contamination risks.

A cathode bar 390 connects the cathode 350 to the negative terminal of a voltage supply. As shown, when assembled, the ends of the article's 20 abutments 12 are proximal and face toward the cathode 350, whereas the coronal end of the abutments 12 onto which the porcelain layer is to be added is distal and faces away from the cathode 350. Furthermore, in the example described, the maximum distance between the cathode 350 and article 20 is approximately not more than 15mm, and more particularly not more than 10mm, the minimum distance being not less than 2.5mm and more particularly not less than 5mm.

Once assembled, the voltage supply is turned on which starts the electrochemical process. A voltage of between 8 to 15 volts and current of 4 amps is applied for approximately 1.5 hours. The holes 380 allow fresh electrolyte to circulate up over the article 20 and in particular the abutments 12. Circulation currents are driven by convention via the heating that occurs in the reaction zone, and by upward motion of hydrogen bubbles 395 generated at the cathode 350. If appropriate, additional apparatus could be used to aid circulation of the electrolyte, for instance a pump or a magnetic stirrers placed at the bottom of the tank, which are turned by magnetic drivers on which the tank 310 sits.

Having the cathode 350 close to the anode (i.e. the article 20) makes for a short electric path length which reduces the resistance of the electrolyte seen by the circuit. This allows the use of relatively low driving voltages, which although will be dependent on the particular circumstances such as the material being processed and the electrolyte being used, can for example be less than 300 volts, for example 200 volts or less, sometimes 100 volts or less, and sometimes 50 volts or less, for example 10 volts or less) while still achieving high electrical current. In the case of cobalt chrome, it can mean that low voltages in the range of 5 to 35 volts can be used. It also increases the tank efficiency by reducing heating caused by Ohmic losses.

The use of approximately 4 litres of electrolyte allows a small magnetic stirrer to impart significant velocity to the entire content of the tank, effectively removing reaction products from the surfaces of the part. For this embodiment, it also means that the electrolyte can absorb the heat generated over one 1.5hr cycle without excessive temperature rise. The change in electrical properties with temperature is not significant enough to have an effect on the polishing if a regulated current power supply is used to maintain a constant current flow. Therefore the use of a regulated current power supply may obviate the need for temperature control. In some applications, however, it may be desirable to include temperature control, particularly a cooling mechanism to prevent the temperature from rising above a predetermined threshold.

As will be understood, the above described process is different to typical electropolishing techniques because the cathode is configured to target a particular select region of the article, as opposed to the whole article. The process is also different to typical electrochemical machining processes because rather than using aggressive electrochemical processes to remove significant amounts of material to as to imprint the shape of the cathode onto the anode material (which typically requires much higher current densities e.g. 1MAm⁻², as opposed to densities typically less than 2000Am⁻² and preferably less than 1500 Am⁻², for example in the region of 1000Am⁻² as used in embodiments according to the present invention). Also, as will be understood, unlike the process of our invention electrochemical machining requires much smaller electrolyte gaps (i.e. not more than 1mm and preferably not more than 0.5mm) and pumping of the electrolyte through the gap to prevent boiling and to evacuate reaction products.

Once the electrochemical process is complete the article 20 is removed from the tank 310.

The next step 140 is an optional step of performing additional processing on the article 20 and in particular the abutment frameworks 12. This can comprise for example clamping the article 20 (e.g. via the hub 22) into a machine tool and performing machining operations on the article, in particular the abutments 12, e.g. machining/milling the abutments 12. For instance, in embodiments in which excess material 14 has been provided at the implant interface region, then interface structures can be machined. Performing such milling or machining after the electrochemical processing of the abutments 12 can mean that the precision of such milled/machined features are not affected by the electrochemical process. Other optional processes include drilling out of other features, such as bores in the abutment 12.

At step 150 the abutment frameworks 12 are detached from the hub 22. They can then be further processed, e.g. manually, so as to remove any remnants of the connecting bar 21. The abutment 12 could for instance be de-burred. Porcelain or a crown can be added to the abutment frameworks 12 so as to provide the final aesthetic appearance. They are then ready to be shipped to a customer for fitting to an implant in a patient's jaw.

In addition to the above, the abutment could be subjected to a roughening procedure, e.g. grit or ablative blasted, to increase the surface roughness of at least select parts of the abutment. For instance it could be advantageous for the surface roughness of the coronal region 9 of the abutment 12 to be roughened prior to adding the porcelain, crown or a bridge, so as to improve the adherence of porcelain, bridge or crown to the abutment. This is especially the case when the abutment is made in accordance with the present invention because the electrical chemical processing could smoothen the coronal region. Select regions of the abutment could be masked in order to reduce or avoid roughening during such a roughening procedure. Accordingly, liquid rubber such as MICCROPeel available from Tolber Chemical Division could be applied to select regions that are to be protected from the roughening procedure.

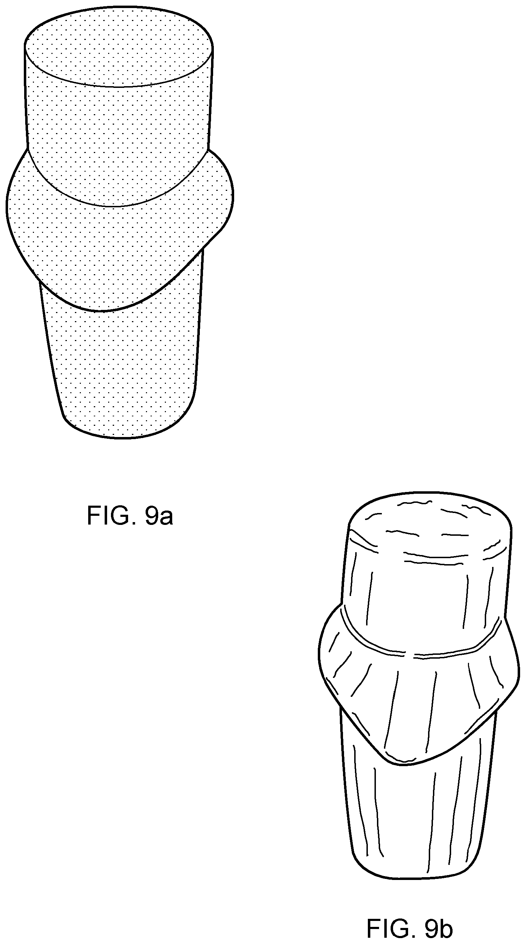

Figures 9a and 9b respectively show pictures of an abutment 12 before and after the electrochemical processing according to the invention from which it can be seen that the roughness of the abutment has been dramatically reduced, and for instance by as much as from 30µm (microns) Ra down to 0.02µm (microns) Ra.

The same electrochemical processing apparatus, and in particular the same cathode, can be used to process a series of articles. Accordingly, the above described article 20 could be removed from the electrochemical processing apparatus and then another article loaded into the apparatus and the same cathode used to electrochemically process the article. This is particularly the case when the articles are manufactured such that the location of the dental restorations on said article are controlled so as to be in predefined positions with respect to the article, and for example in predefined positions around said common hub member.

## Claims

1. An electrochemical processing apparatus for electrochemically processing at least a select region (7) of an article (20) so as to smoothen at least said select region (7), comprising:
an anode provided by said article (20); and
a cathode (350) positioned proximal said article (20) **characterised in that** the cathode is extending at least partly around said select region (7) of said article (20) so as to concentrate said electrochemical processing at said select region (7).

2. An apparatus as claimed in claim 1, in which the cathode (350) is physically secured to said article (20) during said electrochemical processing.

3. An apparatus as claimed in claim 1 or 2, in which said article (20) comprises a plurality of individual products (12) attached to a common member (22).

4. An apparatus as claimed in claim 3, in which the cathode (350) is physically secured to said common member (22) via an electrically insulating barrier member (340).

5. An apparatus as claimed in any one preceding claim, in which the cathode (350) is arranged on the side of the article (20) proximal said select region (7).

6. An apparatus as claimed in any preceding claim, in which the cathode (350) is provided with a region which corresponds generally in shape to said select region (7) of said article (20).

7. An apparatus as claimed in any preceding claim, in which the cathode (450) comprises a trough (360, 370) in which at least a part of the article (20) is at least partially positioned, such as said select region (7) of said article (20).

8. An apparatus as claimed in any preceding claim, wherein the cathode (450) comprises at least one passageway (380) through which electrolyte can pass through the cathode (450).

9. An apparatus as claimed in any preceding claim, comprising a regulated power supply.

10. A method of manufacturing an article (20) comprising:
taking an article in an initial state formed from a powdered material, layer-by-layer, the article comprising at least one product; and
using an apparatus as claimed in any preceding claim to electrochemically process at least a select region (7) of the at least one product so as to smoothen at least said select region.

11. A method as claimed in claim 10, wherein the article comprises a plurality of individual products joined together, the method comprises concurrently electrochemically processing said plurality of products, and the method preferably comprises separating or detaching the products from one another.

12. A method as claimed in claim 10 or 11, wherein the article was formed via a laser consolidation process.

13. A method as claimed in claim 10, 11 or 12, wherein the article was formed via a laser sintering or laser melting process.

14. A method as claimed in any one of claims 10 to 13, comprising forming the article from a powdered material, layer-by-layer.

15. A method as claimed in any one of claims 10 to 14, wherein said at least one product is or comprises at least one dental restoration.

## Patentansprüche

1. Elektrochemische Verarbeitungsvorrichtung zum elektrochemischen Verarbeiten mindestens eines Auswahlbereichs (7) eines Gegenstands (20), um mindestens den Auswahlbereich (7) zu glätten, umfassend:
eine durch den Gegenstand (20) bereitgestellte Anode; und
eine Kathode (350), die nahe dem Gegenstand (20) positioniert ist, **dadurch gekennzeichnet, dass** sich die Kathode zumindest teilweise um den Auswahlbereich (7) des Gegenstands (20) herum erstreckt, um die elektrochemische Verarbeitung an dem Auswahlbereich (7) zu konzentrieren.

2. Vorrichtung nach Anspruch 1, wobei die Kathode (350) während der elektrochemischen Verarbeitung physikalisch an dem Gegenstand (20) befestigt ist.

3. Vorrichtung nach einem der Ansprüche 1 oder 2, wobei der Gegenstand (20) mehrere Einzelprodukte (12) umfasst, die an einem gemeinsamen Element (22) angebracht sind.

4. Vorrichtung nach Anspruch 3, wobei die Kathode (350) über ein elektrisch isolierendes Barriereelement (340) physikalisch an dem gemeinsamen Element (22) befestigt ist.

5. Vorrichtung nach einem der vorhergehenden Ansprüche, wobei die Kathode (350) auf der Seite des Gegenstands (20) nahe dem Auswahlbereich (7) angeordnet ist.

6. Vorrichtung nach einem der vorhergehenden Ansprüche, wobei die Kathode (350) mit einem Bereich versehen ist, dessen Form im Allgemeinen dem Auswahlbereich (7) des Gegenstands (20) entspricht.

7. Vorrichtung nach einem der vorhergehenden Ansprüche, wobei die Kathode (450) eine Wanne (360, 370) umfasst, in der mindestens ein Teil des Gegenstands (20) zumindest teilweise positioniert ist, wie der Auswahlbereich (7) des Gegenstands (20).

8. Vorrichtung nach einem der vorhergehenden Ansprüche, wobei die Kathode (450) mindestens einen Durchgang (380) umfasst, durch den Elektrolyt durch die Kathode (450) gelangen kann.

9. Vorrichtung nach einem der vorhergehenden Ansprüche, umfassend eine geregelte Leistungsversorgung.

10. Verfahren zum Herstellen eines Gegenstands (20), umfassend:
Bereitstellen eines Gegenstands in einem Ausgangszustand, der schichtweise aus einem pulverförmigen Material gebildet wird, wobei der Gegenstand mindestens ein Produkt umfasst; und
Verwenden einer Vorrichtung nach einem der vorhergehenden Ansprüche, um mindestens einen Auswahlbereich (7) des mindestens einen Produkts elektrochemisch zu verarbeiten, um mindestens den Auswahlbereich zu glätten.

11. Verfahren nach Anspruch 10, wobei der Gegenstand mehrere einzelne Produkte umfasst, die miteinander verbunden sind, wobei das Verfahren das gleichzeitige elektrochemische Verarbeiten der mehreren Produkte umfasst und das Verfahren vorzugsweise das Trennen oder Ablösen der Produkte voneinander umfasst.

12. Verfahren nach einem der Ansprüche 10 oder 11, wobei der Gegenstand über einen Laserkonsolidierungsprozess gebildet wurde.

13. Verfahren nach einem der Ansprüche 10, 11 oder 12, wobei der Gegenstand über einen Lasersinter- oder Laserschmelzprozess gebildet wurde.

14. Verfahren nach einem der Ansprüche 10 bis 13, umfassend das schichtweise Bilden des Gegenstands aus einem pulverförmigen Material.

15. Verfahren nach einem der Ansprüche 10 bis 14, wobei das mindestens eine Produkt mindestens eine Zahnrestauration ist oder umfasst.

## Revendications

1. Appareil de traitement électrochimique pour traiter par voie électrochimique au moins une région de sélection (7) d'un article (20) de manière à lisser au moins ladite région de sélection (7), comprenant :
une anode fournie par ledit article (20) ; et
une cathode (350) positionnée à proximité dudit article (20), **caractérisée en ce que** la cathode s'étend au moins partiellement autour de ladite région de sélection (7) dudit article (20) de manière à concentrer ledit traitement électrochimique au niveau de ladite région de sélection (7).

2. Appareil tel que revendiqué dans la revendication 1, dans lequel la cathode (350) est fixée physiquement audit article (20) pendant ledit traitement électrochimique.

3. Appareil tel que revendiqué dans la revendication 1 ou 2, dans lequel ledit article (20) comprend une pluralité de produits individuels (12) attachés à un élément commun (22),

4. Appareil tel que revendiqué dans la revendication 3, dans lequel la cathode (350) est fixée physiquement audit élément commun (22) par un élément barrière électriquement isolant (340).

5. Appareil tel que revendiqué dans l'une quelconque des revendications précédentes, dans lequel la cathode (350) est agencée sur le côté de l'article (20) à proximité de ladite région de sélection (7).

6. Appareil tel que revendiqué dans l'une des revendications précédentes, dans lequel la cathode (350) est pourvue d'une région qui correspond globalement en forme à ladite région de sélection (7) dudit article (20).

7. Appareil tel que revendiqué dans l'une des revendications précédentes, dans lequel la cathode (450) comprend un creux (360, 370) dans lequel au moins une partie de l'article (20) est au moins partiellement positionnée, comme ladite région de sélection (7) dudit article (20).

8. Appareil tel que revendiqué dans l'une des revendications précédentes, dans lequel la cathode (450) comprend au moins un passage (380) à travers lequel l'électrolyte peut passer à travers la cathode (450).

9. Appareil tel que revendiqué dans l'une des revendications précédentes, comprenant une alimentation électrique régulée.

10. Procédé de fabrication d'un article (20) comprenant le fait :
de prendre un article dans un état initial formé à partir d'un matériau en poudre, couche par couche, l'article comprenant au moins un produit ; et
d'utiliser un appareil tel que revendiqué dans l'une des revendications précédentes pour traiter par voie électrochimique au moins une région de sélection (7) de l'au moins un produit de manière à lisser au moins ladite région de sélection.

11. Procédé tel que revendiqué dans la revendication 10, dans lequel l'article comprend une pluralité de produits individuels assemblés, le procédé comprend le fait de traiter par voie électrochimique simultanément ladite pluralité de produits, et le procédé comprend de préférence le fait de séparer ou de détacher les produits les uns des autres.

12. Procédé tel que revendiqué dans la revendication 10 ou 11, dans lequel l'article a été formé par un processus de consolidation laser.

13. Procédé tel que revendiqué dans la revendication 10, 11 ou 12, dans lequel l'article a été formé par un procédé de frittage par laser ou de fusion par laser.

14. Procédé tel que revendiqué dans l'une quelconque des revendications 10 à 13, comprenant la formation de l'article à partir d'un matériau en poudre, couche par couche.

15. Procédé tel que revendiqué dans l'une quelconque des revendications 10 à 14, dans lequel ledit au moins un produit est ou comprend au moins une restauration dentaire.
